# EUROPÄISCHE PATENTANMELDUNG

(11) **EP 4 349 556 A1**
(43) Veröffentlichungstag der Anmeldung: **10.04.2024**
(21) Anmeldenummer: 22200348.5
(22) Anmeldetag: 07.10.2022
(51) Int. Cl.: B29B 7/60, B29B 7/48, B29B 7/90, B29B 7/84, B29B 7/72, B29B 7/86

(54) **AUFBEREITUNGSANLAGE UND VERFAHREN ZUM AUFBEREITEN EINER POLYMER-FÜLLSTOFF-ZUSAMMENSETZUNG, INSBESONDERE EINER POLYVINYLCHLORID-FÜLLSTOFF-ZUSAMMENSETZUNG**

(71) Anmelder: Coperion GmbH, 70469 Stuttgart (DE)
(72) Erfinder: Schweikle, Jürgen Alexander, 74172 Neckarsulm (DE); Hölzel, Maria, 71735 Eberdingen (DE)
(74) Vertreter: Rau, Schneck & Hübner Patentanwälte Rechtsanwälte PartGmbB

(57) **Zusammenfassung**

Eine Aufbereitungsanlage (1) dient zum Aufbereiten einer Polymer-Füllstoff-Zusammensetzung (C), insbesondere einer Polyvinylchlorid-Füllstoff-Zusammensetzung, und umfasst eine Mehrwellen-Schneckenmaschine (2), eine erste Zuführeinrichtung (3) und eine zweite Zuführeinrichtung (4). Mittels der ersten Zuführeinrichtung (3) werden ein Polymer (P) und ein erster Anteil (F₁) eines mineralischen Füllstoffs (F) in die Mehrwellen-Schneckenmaschine (2) zugeführt. Anschließend wird mittels der zweiten Zuführeinrichtung (4) ein zweiter Anteil (F₂) des mineralischen Füllstoffs (F) in die Mehrwellen-Schneckenmaschine (2) zugeführt. Durch das sukzessive Einmischen des mineralischen Füllstoffs (F) wird ein hoher Anteil (Fs) des mineralischen Füllstoffs (F) in der Polymer-Füllstoff-Zusammensetzung (C) erzielt.

## Beschreibung

Die Erfindung betrifft eine Aufbereitungsanlage und ein Verfahren zum Aufbereiten einer Polymer-Füllstoff-Zusammensetzung, insbesondere einer Polyvinylchlorid-Füllstoff-Zusammensetzung. Die Polymer-Füllstoff-Zusammensetzung ist insbesondere ein Polymer-Füllstoff-Masterbatch. Entsprechend ist die Polyvinylchlorid-Füllstoff-Zusammensetzung insbesondere ein Polyvinylchlorid-Füllstoff-Masterbatch. Ein Masterbatch bezeichnet eine Zusammensetzung mit einem hohen Füllstoffanteil. Vorzugsweise ist das Polyvinylchlorid (PVC) ein Hart-Polyvinylchlorid (Hart-PVC).

Aus der EP 2 787 026 A1 ist ein Verfahren zum Aufbereiten eines Polymer-Füllstoff-Masterbatches bekannt. Eine Vormischung aus einem Polymer und einem mineralischen Füllstoff sowie zusätzlicher mineralischer Füllstoff werden zur Aufbereitung einer Mehrwellen-Schneckenmaschine zugeführt. Die Vormischung wird als Dryblend bezeichnet. Der in der Vormischung enthaltene mineralische Füllstoff und der zusätzlich zugeführte mineralische Füllstoff haben zusammen einen Füllstoffanteil in dem Polymer-Füllstoff-Masterbatch von 60 phr bis 900 phr. Die Einheit "phr" ist eine Abkürzung für "parts per hundred resin" und definiert den Masseanteil des Füllstoffs bezogen auf 100 Masseanteile des Polymers.

Der Erfindung liegt die Aufgabe zugrunde, eine Aufbereitungsanlage zu schaffen, die das Aufbereiten einer homogenen Polymer-Füllstoff-Zusammensetzung, insbesondere einer Polyvinylchlorid-Füllstoff-Zusammensetzung, mit einem hohen Anteil eines mineralischen Füllstoffs ermöglicht.

Die Polymer-Füllstoff-Zusammensetzung bzw. die Polyvinylchlorid-Füllstoff-Zusammensetzung ist insbesondere ein Polymer-Füllstoff-Masterbatch bzw. ein Polyvinylchlorid-Füllstoff-Masterbatch. Das Polyvinylchlorid ist insbesondere ein Hart-Polyvinylchlorid.

Diese Aufgabe wird durch eine Aufbereitungsanlage mit den Merkmalen des Anspruchs 1 gelöst. Die Aufbereitungsanlage dient zum kontinuierlichen Aufbereiten einer Polymer-Füllstoff-Zusammensetzung. Dadurch, dass die Aufbereitungsanlage zwei Zuführeinrichtungen umfasst, kann der mineralische Füllstoff sukzessive in die Mehrwellen-Schneckenmaschine zugeführt werden, so dass der mineralische Füllstoff homogen und mit einem hohen Anteil mit dem Polymer bzw. einer aus dem Polymer erzeugten Polymerschmelze vermischt werden kann.

Der Mehrwellen-Schneckenmaschine wird zunächst mittels der ersten Zuführeinrichtung das Polymer und ein erster Anteil F₁ des Füllstoffs zugeführt. Für den ersten Anteil F₁ gilt insbesondere: 20 phr ≤ F₁ ≤ 300 phr, insbesondere 40 phr ≤ F₁ ≤ 250 phr, und insbesondere 50 phr ≤ F₁ ≤ 200 phr. Die Einheit "phr" ist eine Abkürzung für "parts per hundred resin" und definiert den Masseanteil des mineralischen Füllstoffs in Bezug auf 100 Masseanteile des Polymers.

Erfindungsgemäß wurde erkannt, dass der erste Anteil F₁ des mineralischen Füllstoffs in der Höhe begrenzt ist bzw. nicht zu hoch sein darf, da der erste Anteil F₁ während des Aufschmelzens bzw. des Plastifizierens des Polymers eingemischt werden muss. Ist der erste Anteil F₁ zu hoch, treten Probleme beim Einziehen bzw. Zuführen des Polymers und des mineralischen Füllstoffs zu der Mehrwellen-Schneckenmaschine und/oder Probleme beim Aufschmelzen des Polymers und beim Einmischen des mineralischen Füllstoffs auf Insbesondere droht die Gefahr, dass beim Aufschmelzen und Einmischen zu viel mechanische Energie in das Polymer eingebracht bzw. das Polymer überschert wird, so dass das Polymer aufgrund einer unerwünscht hohen Temperatur degradiert.

Mittels der zweiten Zuführeinrichtung kann in einer Förderrichtung der Mehrwellen-Schneckenmaschine stromabwärts zu der Zuführung des Polymers und des ersten Anteils F₁ des mineralischen Füllstoffs ein zweiter Anteil F₂ des mineralischen Füllstoffs in die Mehrwellen-Schneckenmaschine zugeführt werden. Für den zweiten Anteil F₂ gilt insbesondere: 300 phr ≤ F₂ ≤ 1100 phr, insbesondere 400 phr ≤ F₂ ≤ 1000 phr, und insbesondere 500 ≤ F₂ ≤ 900 phr. Der zweite Anteil F₂ wird in die Mischung aus dem aufgeschmolzenen Polymer und dem darin eingemischten ersten Anteil F₁ des mineralischen Füllstoffs zugeführt. Da das Polymer bereits aufgeschmolzen und der erste Anteil F₁ bereits in das aufgeschmolzene Polymer eingemischt ist, kann ein vergleichsweise hoher zweiter Anteil F₂ in einfacher Weise homogen eingemischt werden, so dass die entstehende Polymer-Füllstoff-Zusammensetzung einen homogen eingemischten und hohen Gesamtanteil Fₛ des mineralischen Füllstoffs beinhaltet. Es gilt insbesondere: F₁ < F₂ ≤ 20 · F₁, insbesondere 2 · F₁ ≤ F₂ ≤ 10 · F₁, und insbesondere 3 · F₁ ≤ F₂ ≤ 5 · F₁.

Für den Gesamtanteil Fₛ gilt: Fₛ = F₁ + F₂. Für den Gesamtanteil gilt insbesondere: 350 phr ≤ Fₛ ≤ 1400 phr, insbesondere 450 phr ≤ Fₛ ≤ 1300 phr, und insbesondere 550 phr ≤ Fₛ ≤ 1200 phr.

Das Polymer ist insbesondere Polyvinylchlorid (PVC), vorzugsweise ein Hart-Polyvinylchlorid (Hart-PVC). Der mineralische Füllstoff ist insbesondere ausgewählt aus der Gruppe Calciumcarbonat (CaCO₃), Aluminiumhydroxid und Talkum.

Das Polymer und/oder der erste Anteil F₁ des mineralischen Füllstoffs und/oder der zweite Anteil F₂ des mineralischen Füllstoffs ist insbesondere beim Zuführen pulverförmig ausgebildet.

Die Mehrwellen-Schneckenmaschine umfasst insbesondere ein Gehäuse, in dem mindestens zwei Gehäusebohrungen ausgebildet sind. Die mindestens zwei Gehäusebohrungen durchdringen einander, insbesondere zumindest paarweise. In den mindestens zwei Gehäusebohrungen ist jeweils eine Behandlungselementwelle angeordnet. Die Mehrwellen-Schneckenmaschine umfasst somit mindestens zwei Behandlungselementwellen. Die mindestens zwei Behandlungselementwellen sind vorzugsweise einander kämmend ausgebildet und/oder angeordnet. Die mindestens zwei Behandlungselementwellen sind vorzugsweise in gleichen Drehrichtungen um zugehörige Drehachsen drehantreibbar bzw. rotierbar. Die mindestens zwei Behandlungselementwellen bzw. die zugehörigen Drehachsen sind insbesondere parallel zueinander ausgerichtet. Vorzugsweise ist die Mehrwellen-Schneckenmaschine als Zweiwellen-Schneckenmaschine ausgebildet. Die zwei Behandlungselementwellen sind insbesondere in gleichen Drehrichtungen um zugehörige Drehachsen drehantreibbar bzw. rotierbar.

Die Aufbereitungsanlage umfasst insbesondere eine Steuereinrichtung zum Steuern der Mehrwellen-Schneckenmaschine und/oder der ersten Zuführeinrichtung und/oder der zweiten Zuführeinrichtung.

Eine Aufbereitungsanlage nach Anspruch 2 gewährleistet das Aufbereiten einer homogenen Polymer-Füllstoff-Zusammensetzung mit einem hohen Anteil eines mineralischen Füllstoffs. Die Mehrwellen-Schneckenmaschine umfasst insbesondere ein Gehäuse, in dem mindestens zwei Gehäusebohrungen ausgebildet sind. In den mindestens zwei Gehäusebohrungen ist jeweils eine Behandlungselementwelle um eine zugehörige Drehachse rotierbar angeordnet. Die erste Zuführöffnung und die zweite Zuführöffnung münden in die mindestens zwei Gehäusebohrungen. Die zweite Zuführöffnung ist in der Förderrichtung der Mehrwellen-Schneckenmaschine stromabwärts zu der ersten Zuführöffnung angeordnet. Durch die erste Zuführöffnung wird mittels der ersten Zuführeinrichtung das Polymer und der erste Anteil F₁ des mineralischen Füllstoffs in die Mehrwellen-Schneckenmaschine bzw. deren mindestens zwei Gehäusebohrungen zugeführt. Der zweite Anteil F₂ des mineralischen Füllstoffs wird durch die zweite Zuführöffnung mittels der zweiten Zuführeinrichtung in die Mehrwellen-Schneckenmaschine bzw. deren mindestens zwei Gehäusebohrungen zugeführt. Dadurch, dass die zweite Zuführöffnung in der Förderrichtung stromabwärts zu der ersten Zuführöffnung angeordnet ist, kann vor der zweiten Zuführöffnung das Polymer zunächst aufgeschmolzen werden. Der erste Anteil F₁ des mineralischen Füllstoffs kann zunächst in die Polymerschmelze eingemischt werden, bevor der zweite Anteil F₂ des mineralischen Füllstoffs in die Mehrwellen-Schneckenmaschine zugeführt und anschließend in die Mischung aus der Polymerschmelze und dem eingemischten ersten Anteil F₁ des Füllstoffs eingemischt wird.

Eine Aufbereitungsanlage nach Anspruch 3 gewährleistet das Aufbereiten einer homogenen Polymer-Füllstoff-Zusammensetzung mit einem hohen Anteil eines mineralischen Füllstoffs. Die Mehrwellen-Schneckenmaschine umfasst insbesondere ein Gehäuse, in dem mindestens zwei Gehäusebohrungen ausgebildet sind. In den mindestens zwei Gehäusebohrungen ist eine jeweilige Behandlungselementwelle um zugehörige Drehachsen drehbar angeordnet. Die mindestens zwei Behandlungselementwellen sind vorzugsweise in gleichen Drehrichtungen um die Drehachsen drehbar. Die erste Zuführöffnung und die zweite Zuführöffnung münden in die mindestens zwei Gehäusebohrungen. Das Polymer und der erste Anteil F₁ des mineralischen Füllstoffs werden mittels der ersten Zuführeinrichtung durch die erste Zuführöffnung in die Mehrwellen-Schneckenmaschine bzw. deren mindestens zwei Gehäusebohrungen zugeführt. Dadurch, dass die zweite Zuführöffnung in der Förderrichtung der Mehrwellen-Schneckenmaschine stromabwärts zu der ersten Zuführöffnung angeordnet ist, kann das Polymer vor der zweiten Zuführöffnung in der Aufschmelzzone aufgeschmolzen werden. Vorzugsweise ist die Aufschmelzzone so ausgebildet, dass vor der zweiten Zuführöffnung das Polymer aufgeschmolzen und der erste Anteil F₁ des mineralischen Füllstoffs zumindest teilweise in das aufgeschmolzene Polymer bzw. die Polymerschmelze eingemischt wird. Der zweite Anteil F₂ des mineralischen Füllstoffs wird mittels der zweiten Zuführeinrichtung durch die zweite Zuführöffnung in die Mehrwellen-Schneckenmaschine bzw. deren mindestens zwei Gehäusebohrungen zugeführt. Der zweite Anteil F₂ des mineralischen Füllstoffs kann in einfacher Weise stromabwärts zu der zweiten Zuführöffnung in die Polymerschmelze bzw. in die Mischung aus der Polymerschmelze und des bereits eingemischten ersten Anteils F₁ des mineralischen Füllstoffs eingemischt werden.

Die mindestens zwei Behandlungselementwellen haben einen Außendurchmesser D und in der Förderrichtung eine Länge L. Der Außendurchmesser D ist insbesondere ein maximaler Außendurchmesser. Für ein Verhältnis L/D gilt insbesondere: 32 ≤ L/D ≤ 56, insbesondere 34 ≤ L/D ≤ 44, und insbesondere 36 ≤ L/D ≤ 40.

Die Aufschmelzzone hat in der Förderrichtung eine Länge L_{A}. Die Aufschmelzzone beginnt bei einem jeweiligen ersten Knetelement der mindestens zwei Behandlungselementwellen und endet bei der zweiten Zuführöffnung. Die Länge L_{A} ist somit zwischen dem jeweiligen ersten Knetelement der mindestens zwei Behandlungselementwellen und der zweiten Zuführöffnung definiert. Das erste Knetelement ist insbesondere als Knetscheibe ausgebildet. Für ein Verhältnis L_{A}/D gilt insbesondere: 6 ≤ L_{A}/D ≤ 14, insbesondere 7 ≤ L_{A}/D ≤ 13, und insbesondere 8 ≤ L_{A}/D ≤ 12. Ist das Verhältnis L_{A}/D zu klein, besteht die Gefahr, dass das Polymer nicht zufriedenstellend aufgeschmolzen und/oder der erste Anteil F₁ des mineralischen Füllstoffs nicht zufriedenstellend eingemischt wird. Ist das Verhältnis L_{A}/D zu groß, besteht die Gefahr, dass das Polymer aufgrund einer zu langen Verweilzeit degradiert.

Eine Aufbereitungsanlage nach Anspruch 4 gewährleistet das Aufbereiten einer homogenen Polymer-Füllstoff-Zusammensetzung mit einem hohen Anteil eines mineralischen Füllstoffs. Die erste Zuführschneckenmaschine ermöglicht in einfacher Weise ein dosiertes Zuführen des Polymers und des ersten Anteils F₁ des mineralischen Füllstoffs. Die erste Zuführschneckenmaschine mündet insbesondere in eine erste Zuführöffnung, die in einem Gehäuse der Mehrwellen-Schneckenmaschine ausgebildet ist. Die erste Zuführschneckenmaschine ist insbesondere seitlich an ein Gehäuse der Mehrwellen-Schneckenmaschine angeschlossen. Die erste Zuführschneckenmaschine mündet insbesondere in mindestens zwei Gehäusebohrungen, die in dem Gehäuse der Mehrwellen-Schneckenmaschine ausgebildet sind. Die erste Zuführschneckenmaschine ist insbesondere als Seitenbeschickungsmaschine ausgebildet. Die erste Zuführschneckenmaschine umfasst insbesondere ein Gehäuse, in dem mindestens eine Gehäusebohrung ausgebildet ist. In der mindestens einen Gehäusebohrung ist jeweils eine Förderelementwelle drehbar angeordnet. Vorzugsweise ist die erste Zuführschneckenmaschine zweiwellig ausgebildet. Die erste Zuführschneckenmaschine umfasst insbesondere ein Gehäuse, in dem zwei Gehäusebohrungen ausgebildet sind. Die zwei Gehäusebohrungen durchdringen einander und haben im Querschnitt die Form einer liegenden Acht. In den zwei Gehäusebohrungen ist jeweils eine Förderelementwelle drehbar angeordnet. Die erste Zuführschneckenmaschine umfasst somit insbesondere zwei Förderelementwellen. Die zwei Förderelementwellen sind vorzugsweise in gleichen Richtungen drehbar bzw. drehantreibbar. Durch das Fördern des Polymers und des ersten Anteils F₁ des mineralischen Füllstoffs wird der erste Anteil F₁ des mineralischen Füllstoffs mit dem Polymer zumindest teilweise gemischt. Die erste Zuführschneckenmaschine ermöglicht ferner ein Zuführen mit einem hohen Durchsatz.

In dem Gehäuse der ersten Zuführschneckenmaschine ist insbesondere mindestens eine Entgasungsöffnung ausgebildet. Vorzugsweise umfasst die erste Zuführeinrichtung eine Entgasungseinheit, die an die mindestens eine Entgasungsöffnung angeschlossen ist. Hierdurch kann das pulverförmige Polymer und/oder der erste Anteil F₁ des pulverförmigen mineralischen Füllstoffs entgast werden. Insbesondere kann Luft aus der ersten Zuführschneckenmaschine und/oder dem Polymer und/oder dem ersten Anteil F₁ des mineralischen Füllstoffs entfernt werden. Durch das Entgasen kann das Polymer und der erste Anteil F₁ des mineralischen Füllstoffs in einfacher Weise mit einem hohen Durchsatz der Mehrwellen-Schneckenmaschine zugeführt werden. Insbesondere können Einzugsprobleme bei der Mehrwellen-Schneckenmaschine vermieden werden.

Eine Aufbereitungsanlage nach Anspruch 5 gewährleistet das Aufbereiten einer homogenen Polymer-Füllstoff-Zusammensetzung mit einem hohen Anteil eines mineralischen Füllstoffs. Der erste Dosierer und/oder der zweite Dosierer ist gravimetrisch und/oder volumetrisch ausgebildet. Der erste Dosierer dient zum Dosieren einer Vormischung aus dem Polymer und einem Basisanteil F₁₁ des mineralischen Füllstoffs. Die Vormischung wird auch als Dryblend bezeichnet. Demgegenüber dient der zweite Dosierer zum Dosieren eines Zusatzanteils F₁₂ des mineralischen Füllstoffs. Die Summe aus dem Basisanteil F₁₁ und dem Zusatzanteil F₁₂ ergibt den ersten Anteil F₁ des mineralischen Füllstoffs. Es gilt somit: F₁ = F₁₁ + F₁₂.

Für den Basisanteil F₁₁ gilt insbesondere: 1 phr ≤ F₁₁ ≤ 70 phr, insbesondere 10 phr ≤ F₁₁ ≤ 60 phr, insbesondere 20 phr ≤ F₁₁ ≤ 50 phr und insbesondere 30 phr ≤ F₁₁ ≤ 40 phr.

Für den Zusatzanteil F₁₂ gilt insbesondere: 10 phr ≤ F₁₂ ≤ 230 phr, insbesondere 70 phr ≤ F₁₂ ≤ 200 phr und insbesondere 90 phr ≤ F₁₂ ≤ 180 phr. Vorzugsweise gilt: F₁₁ ≤ F₁₂ ≤ 20 · F₁₁, insbesondere 2 · F₁₁ ≤ F₁₂ ≤ 15 · F₁₁, und insbesondere 3 · F₁₁ ≤ F₁₂ ≤ 10 · F₁₁.

Der Basisanteil F₁₁ in der Vormischung ist in seiner Höhe begrenzt, da sich das Polymer und der mineralische Füllstoff bei einem zu hohen Basisanteil F₁₁ beim Transport oder der Zwischenlagerung entmischen. Durch den Zusatzanteil F₁₂ kann der erste Anteil F₁ des mineralischen Füllstoffs in einfacher Weise erhöht werden.

Eine Aufbereitungsanlage nach Anspruch 6 gewährleistet das Aufbereiten einer homogenen Polymer-Füllstoff-Zusammensetzung mit einem hohen Anteil eines mineralischen Füllstoffs. Die mindestens eine Entgasungsöffnung ermöglicht ein einfaches Zuführen des Polymers und des ersten Anteils F₁ des mineralischen Füllstoffs mit einem hohen Durchsatz.

Vorzugsweise weist die erste Zuführeinrichtung, insbesondere die erste Zuführschneckenmaschine, mindestens eine Entgasungsöffnung auf. Die mindestens eine Entgasungsöffnung ist insbesondere in einem Gehäuse der ersten Zuführschneckenmaschine ausgebildet. Vorzugsweise umfasst die erste Zuführeinrichtung eine Entgasungseinheit, die an die mindestens eine Entgasungsöffnung angeschlossen ist.

Vorzugsweise weist die Mehrwellen-Schneckenmaschine mindestens eine Entgasungsöffnung auf. Die mindestens eine Entgasungsöffnung ist insbesondere in einer ersten Einzugszone der Mehrwellen-Schneckenmaschine und/oder benachbart zu einer ersten Zuführöffnung der Mehrwellen-Schneckenmaschine angeordnet. Die mindestens eine Entgasungsöffnung ist insbesondere in einem Gehäuse der Mehrwellen-Schneckenmaschine ausgebildet. Die mindestens eine Entgasungsöffnung ist insbesondere in einer Förderrichtung der Mehrwellen-Schneckenmaschine stromaufwärts zu der ersten Zuführöffnung angeordnet. Vorzugsweise umfasst die Mehrwellen-Schneckenmaschine eine Entgasungseinheit, die an die mindestens eine Entgasungsöffnung der Mehrwellen-Schneckenmaschine angeschlossen ist. Die Entgasungseinheit ist insbesondere atmosphärisch ausgebildet. Die Entgasungseinheit dient insbesondere zum atmosphärischen Entgasen bzw. zum atmosphärischen Entlüften.

Vorzugsweise umfasst die Mehrwellen-Schneckenmaschine eine erste Entgasungsöffnung und die erste Zuführschneckenmaschine eine zweite Entgasungsöffnung. Vorzugsweise umfasst die Mehrwellen-Schneckenmaschine eine erste Entgasungseinheit, die an die erste Entgasungsöffnung angeschlossen ist. Die erste Zuführeinrichtung umfasst insbesondere eine zweite Entgasungseinheit, die an die zweite Entgasungsöffnung angeschlossen ist. Die erste Entgasungseinheit und/oder die zweite Entgasungseinheit ist insbesondere atmosphärisch ausgebildet. Die erste Entgasungseinheit und/oder die zweite Entgasungseinheit dient insbesondere zum atmosphärischen Entgasen bzw. zum atmosphärischen Entlüften.

Die jeweilige Entgasungseinheit kann ein Eingriffschutzgitter, einen Entgasungseinsatz, einen Entgasungsdom, eine Entgasungsschneckenmaschine und/oder eine Vakuumpumpe umfassen.

Eine Aufbereitungsanlage nach Anspruch 7 gewährleistet das Aufbereiten einer homogenen Polymer-Füllstoff-Zusammensetzung mit einem hohen Anteil eines mineralischen Füllstoffs. Die zweite Zuführeinrichtung gewährleistet in einfacher Weise ein dosiertes Zuführen des zweiten Anteils F₂ des mineralischen Füllstoffs in die Mehrwellen-Schneckenmaschine. Der dritte Dosierer mündet insbesondere in die zweite Zuführschneckenmaschine. Der dritte Dosierer ist gravimetrisch oder volumetrisch ausgebildet. Die zweite Zuführschneckenmaschine mündet insbesondere in eine zweite Zuführöffnung, die in einem Gehäuse der Mehrwellen-Schneckenmaschine ausgebildet ist.

Die zweite Zuführschneckenmaschine ist insbesondere seitlich an ein Gehäuse der Mehrwellen-Schneckenmaschine angeschlossen. Die zweite Zuführschneckenmaschine mündet insbesondere in mindestens zwei Gehäusebohrungen, die in dem Gehäuse der Mehrwellen-Schneckenmaschine ausgebildet sind. Die zweite Zuführschneckenmaschine ist insbesondere als Seitenbeschickungsmaschine ausgebildet. Die zweite Zuführschneckenmaschine umfasst insbesondere ein Gehäuse, in dem mindestens eine Gehäusebohrung ausgebildet ist. In der mindestens einen Gehäusebohrung ist jeweils eine Förderelementwelle drehbar angeordnet. Vorzugsweise ist die zweite Zuführschneckenmaschine zweiwellig ausgebildet. Die zweite Zuführschneckenmaschine umfasst insbesondere ein Gehäuse, in dem zwei Gehäusebohrungen ausgebildet sind. Die zwei Gehäusebohrungen durchdringen einander und haben im Querschnitt die Form einer liegenden Acht. In den zwei Gehäusebohrungen ist jeweils eine Förderelementwelle drehbar angeordnet. Die zweite Zuführschneckenmaschine umfasst somit insbesondere zwei Förderelementwellen. Die zwei Förderelementwellen sind vorzugsweise in gleichen Richtungen drehbar bzw. drehantreibbar. Die zweite Zuführschneckenmaschine ermöglicht ein Zuführen des zweiten Anteils F₂ des mineralischen Füllstoffs mit einem hohen Durchsatz.

In dem Gehäuse der zweiten Zuführschneckenmaschine ist insbesondere mindestens eine Entgasungsöffnung ausgebildet. Vorzugsweise umfasst die zweite Zuführeinrichtung eine Entgasungseinheit, die an die mindestens eine Entgasungsöffnung angeschlossen ist. Hierdurch kann der zweite Anteil F₂ des pulverförmigen mineralischen Füllstoffs entgast werden. Insbesondere kann Luft aus der zweiten Zuführschneckenmaschine und/oder dem zweiten Anteil F₂ des mineralischen Füllstoffs entfernt werden. Durch das Entgasen kann der zweite Anteil F₂ des mineralischen Füllstoffs in einfacher Weise mit einem hohen Durchsatz der Mehrwellen-Schneckenmaschine zugeführt werden. Insbesondere können Einzugsprobleme bei der Mehrwellen-Schneckenmaschine vermieden werden.

Eine Aufbereitungsanlage nach Anspruch 8 gewährleistet das Aufbereiten einer homogenen Polymer-Füllstoff-Zusammensetzung mit einem hohen Anteil eines mineralischen Füllstoffs. Die mindestens eine Entgasungsöffnung ermöglicht in einfacher Weise ein dosiertes Zuführen des zweiten Anteils F₂ des mineralischen Füllstoffs. Der zweite Anteil F₂ des mineralischen Füllstoffs wird insbesondere pulverförmig in die Mehrwellen-Schneckenmaschine zugeführt. Durch das Entgasen wird insbesondere Luft abgeführt, so dass mit dem zweiten Anteil F₂ zugeführte Luft nicht in der Mehrwellen-Schneckenmaschine stromaufwärts strömen und die Förderung des aufgeschmolzenen Polymers beeinträchtigen kann.

Die mindestens eine Entgasungsöffnung ist insbesondere stromaufwärts und/oder stromabwärts zu einer zweiten Zuführöffnung der Mehrwellen-Schneckenmaschine angeordnet. Vorzugsweise ist die mindestens eine Entgasungsöffnung an eine jeweilige Entgasungseinheit angeschlossen. Die Entgasungseinheit ist insbesondere atmosphärisch ausgebildet. Die Entgasungseinheit dient insbesondere zum atmosphärischen Entgasen bzw. zum atmosphärischen Entlüften.

Vorzugsweise umfasst die Mehrwellen-Schneckenmaschine eine dritte Entgasungsöffnung, die stromabwärts zu der zweiten Zuführöffnung angeordnet ist, und eine vierte Entgasungsöffnung, die im Bereich der zweiten Zuführöffnung, insbesondere stromaufwärts zu der zweiten Zuführöffnung, angeordnet ist. Die Mehrwellen-Schneckenmaschine umfasst insbesondere eine dritte Entgasungseinheit, die an die dritte Entgasungsöffnung angeschlossen ist, und eine vierte Entgasungseinheit, die an die vierte Entgasungsöffnung angeschlossen ist. Die dritte Entgasungseinheit umfasst insbesondere eine Entgasungsschneckenmaschine. Die vierte Entgasungseinheit ist insbesondere atmosphärisch ausgebildet.

Vorzugsweise mündet eine zweite Zuführschneckenmaschine der zweiten Zuführeinrichtung in die zweite Zuführöffnung. Die zweite Zuführschneckenmaschine hat insbesondere mindestens eine Entgasungsöffnung. Vorzugsweise umfasst die Mehrwellen-Schneckenmaschine und/oder die zweite Zuführeinrichtung eine Entgasungseinheit, die an die mindestens eine Entgasungsöffnung angeschlossen ist. Die Entgasungseinheit umfasst insbesondere eine Entgasungsschneckenmaschine. Die Entgasungsschneckenmaschine ist insbesondere zweiwellig ausgebildet. Vorzugsweise ist die Entgasungsschneckenmaschine seitlich an ein Gehäuse der Mehrwellen-Schneckenmaschine angeschlossen.

Die jeweilige Entgasungseinheit kann ein Eingriffschutzgitter, einen Entgasungseinsatz, einen Entgasungsdom, eine Entgasungsschneckenmaschine und/oder eine Vakuumpumpe umfassen.

Eine Aufbereitungsanlage nach Anspruch 9 gewährleistet das Aufbereiten einer homogenen Polymer-Füllstoff-Zusammensetzung mit einem hohen Anteil eines mineralischen Füllstoffs. Dadurch, dass mindestens eine Entgasungsöffnung in der Förderrichtung stromabwärts zu der zweiten Zuführöffnung angeordnet ist, kann ein Entgasen während des Einmischens des zweiten Anteils F₂ des mineralischen Füllstoffs in das aufgeschmolzene Polymer erfolgen. Vorzugsweise ist eine Entgasungsöffnung seitlich in einem Gehäuse der Mehrwellen-Schneckenmaschine ausgebildet. An diese Entgasungsöffnung ist insbesondere eine Entgasungsschneckenmaschine angeschlossen. Ein Gehäuse der Entgasungsschneckenmaschine ist insbesondere seitlich mit einem Gehäuse der Mehrwellen-Schneckenmaschine verbunden. Die Entgasungsschneckenmaschine ist insbesondere zweiwellig ausgebildet. Hierdurch wird in effizienter Weise ein Entgasen während des Einmischens gewährleistet.

Eine Aufbereitungsanlage nach Anspruch 10 gewährleistet das Aufbereiten einer homogenen Polymer-Füllstoff-Zusammensetzung mit einem hohen Anteil eines mineralischen Füllstoffs. Die erste Homogenisierungszone erstreckt sich in der Förderrichtung von der zweiten Zuführöffnung bis zu der Entgasungsöffnung, die der zweiten Zuführöffnung stromabwärts am nächsten liegt. Die Mehrwellen-Schneckenmaschine umfasst mindestens zwei Behandlungselementwellen, die einen Außendurchmesser D haben. Der Außendurchmesser D ist insbesondere ein maximaler Außendurchmesser. Die erste Homogenisierungszone hat in der Förderrichtung insbesondere eine Länge L_{H1}. Für ein Verhältnis L_{H1}/D gilt insbesondere: 4 ≤ L_{H1}/D ≤ 12, insbesondere 5 ≤ L_{H1}/D ≤ 11, und insbesondere 6 ≤ L_{H1}/D ≤ 10. In der ersten Homogenisierungszone weisen die mindestens zwei Behandlungselementwellen jeweils mindestens ein Knetelement auf. Das mindestens eine Knetelement ist insbesondere als Knetscheibe ausgebildet, vorzugsweise als Knetblock mit mehreren einteilig miteinander verbundenen Knetscheiben. Die erste Homogenisierungszone dient zum Homogenisieren der Polymerschmelze und des darin eingemischten ersten Anteils F₁ des mineralischen Füllstoffs mit dem zweiten Anteil F₂ des mineralischen Füllstoffs.

Eine Aufbereitungsanlage nach Anspruch 11 gewährleistet das Aufbereiten einer homogenen Polymer-Füllstoff-Zusammensetzung mit einem hohen Anteil eines mineralischen Füllstoffs. In der zweiten Homogenisierungszone findet insbesondere eine finale Dispergierung des zweiten Anteils F₂ des mineralischen Füllstoffs statt. Nach dem Entgasen bzw. dem Abführen der mit dem Zuführen eingetragenen Luft ist dies in einfacher und effizienter Weise möglich. Dadurch, dass die mindestens eine Entgasungsöffnung in der Förderrichtung stromabwärts zu der zweiten Zuführöffnung angeordnet ist, ist ein Entgasen in der Förderrichtung bzw. ein Abführen der eingetragenen Luft in der Förderrichtung möglich, wodurch die Förderung des aufgeschmolzenen Polymers und des darin eingemischten ersten Anteils F₁ des mineralischen Füllstoffs nicht beeinträchtigt wird. Die zweite Homogenisierungszone erstreckt sich zwischen der Entgasungsöffnung, die der zweiten Zuführöffnung stromabwärts am entferntesten angeordnet ist, und einer Austragsöffnung der Mehrwellen-Schneckenmaschine. Die Mehrwellen-Schneckenmaschine umfasst mindestens zwei Behandlungselementwellen, die einen Außendurchmesser D haben. Der Außendurchmesser D ist insbesondere ein maximaler Außendurchmesser. Die zweite Homogenisierungszone hat in der Förderrichtung eine Längs L_{H2}. Für ein Verhältnis L_{H2}/D gilt insbesondere: 2 ≤ L_{H2}/D ≤ 8, insbesondere 3 ≤ L_{H2}/D ≤ 7, und insbesondere 4 ≤ L_{H2}/D ≤ 6. In der zweiten Homogenisierungszone umfassen die mindestens zwei Behandlungselementwellen jeweils mindestens ein Knetelement. Das mindestens eine Knetelement ist insbesondere als Knetscheibe ausgebildet, vorzugsweise als Knetblock mit mehreren einteilig miteinander verbundenen Knetscheiben.

Eine Aufbereitungsanlage nach Anspruch 12 gewährleistet das Aufbereiten einer homogenen Polymer-Füllstoff-Zusammensetzung mit einem hohen Anteil eines mineralischen Füllstoffs. Für eine Granulierung der Polymer-Füllstoff-Zusammensetzung ist eine Erhöhung des Drucks erforderlich.

Durch die separate Druckaufbaueinrichtung wird die Mehrwellen-Schneckenmaschine nicht zum Druckaufbau genutzt. Da die Mehrwellen-Schneckenmaschine im Wesentlichen ausschließlich zum Aufbereiten der Polymer-Füllstoff-Zusammensetzung genutzt wird, staut sich die Polymer-Füllstoff-Zusammensetzung vor dem Austrag im Wesentlichen nicht zurück, wodurch ein unerwünschter Energieeintrag und eine hieraus resultierende Degradierung der Polymer-Füllstoff-Zusammensetzung vermieden wird. Ein übermäßiger Rückstau vor dem Austrag in Folge eines Druckaufbaus in der Mehrwellen-Schneckenmaschine wäre nachteilig, da in die Polymer-Füllstoff-Zusammensetzung in einem unerwünschten Maß mechanische Energie eingebracht werden würde, wodurch die Temperatur der scherempfindlichen Polymer-Füllstoff-Zusammensetzung in unerwünschter Weise ansteigen und die Polymer-Füllstoff-Zusammensetzung in Folge dessen degradieren würde.

Die Druckaufbaueinrichtung umfasst insbesondere eine einwellige Druckaufbauschneckenmaschine und/oder eine mehrwellige Druckaufbauschneckenmaschine. Vorzugsweise umfasst die Aufbereitungsanlage eine Verbindungseinrichtung, die die Mehrwellen-Schneckenmaschine mit der Druckaufbaueinrichtung verbindet. Die Verbindungseinrichtung umfasst insbesondere ein Verbindungselement, beispielsweise einen geschlossenen Schacht, das mindestens eine Austragsöffnung der Mehrwellen-Schneckenmaschine mit einer Zuführöffnung der Druckaufbaueinrichtung verbindet. Die Verbindungseinrichtung umfasst insbesondere eine Entgasungseinheit. Die Entgasungseinheit ist beispielsweise an ein Verbindungselement, insbesondere einen geschlossenen Schacht, angeschlossen. Das Zuführen der Polymer-Füllstoff-Zusammensetzung zu der Druckaufbaueinrichtung erfolgt vorzugsweise drucklos. Hierzu ist beispielsweise die mindestens eine Austragsöffnung zum Austragen der Polymer-Füllstoff-Zusammensetzung aus der Mehrwellen-Schneckenmaschine in der Richtung der Schwerkraft oberhalb einer Zuführöffnung der Druckaufbaueinrichtung angeordnet. Vorzugsweise ermöglicht die Druckaufbaueinrichtung die Erzielung einer Druckerhöhung Δp, wobei insbesondere gilt: 1 bar ≤ Δp ≤ 100 bar, insbesondere 2 bar ≤ Δp ≤ 80 bar und insbesondere 3 bar ≤ Δp ≤ 60 bar.

Eine Aufbereitungsanlage nach Anspruch 13 gewährleistet das Aufbereiten einer homogenen Polymer-Füllstoff-Zusammensetzung mit einem hohen Anteil eines mineralischen Füllstoffs. Die gegenläufige Mehrwellen-Druckaufbauschneckenmaschine umfasst ein Gehäuse, in dem mindestens zwei Gehäusebohrungen ausgebildet sind. In den mindestens zwei Gehäusebohrungen ist jeweils eine Druckaufbauwelle drehbar angeordnet. Die mindestens zwei Druckaufbauwellen sind gegenläufig, also in entgegengesetzten Drehrichtungen drehbar bzw. drehantreibbar. Die mindestens zwei Druckaufbauwellen sind vorzugsweise einander kämmend ausgebildet und/oder angeordnet. Vorzugsweise umfasst die Druckaufbaueinrichtung eine gegenläufige Zweiwellen-Druckaufbauschneckenmaschine. Die Mehrwellen-Druckaufbauschneckenmaschine bildet insbesondere eine Einzugszone und eine Druckaufbauzone aus. Vorzugsweise bildet die Mehrwellen-Druckaufbauschneckenmaschine ausschließlich eine Einzugszone und eine Druckaufbauzone aus.

Die Mehrwellen-Druckaufbauschneckenmaschine weist insbesondere mindestens zwei Druckaufbauwellen auf. Die Druckaufbauwirkung der Mehrwellen-Druckaufbauschneckenmaschine kann insbesondere optimiert werden durch eine Steigung bzw. einen Förderwinkel der mindestens zwei Druckaufbauwellen, eine Gangzahl und/oder eine Gangtiefe der mindestens zwei Druckaufbauwellen und/oder eine Kammbreite und/oder ein Kammspiel der mindestens zwei Druckaufbauwellen. Die Druckaufbauwirkung wird beispielsweise erhöht, je kleiner die Steigung bzw. der Förderwinkel ist, je kleiner die Gangtiefe, je geringer die Ganganzahl und/oder je kleiner das Kammspiel ist.

Die mindestens zwei Druckaufbauwellen haben in der Förderrichtung eine Länge L_{D} und einen Außendurchmesser D_{D}. Der Außendurchmesser D_{D} ist insbesondere ein maximaler Außendurchmesser. Für ein Verhältnis L_{D}/D_{D} gilt insbesondere: 3 ≤ L_{D}/D_{D} ≤ 10, insbesondere 4 ≤ L_{D}/D_{D} ≤ 9, und insbesondere 5 ≤ L_{D}/D_{D} ≤ 8.

Die Polymer-Füllstoff-Zusammensetzung ist aufgrund des hohen Anteils Fₛ des mineralischen Füllstoffs zähflüssig. Die gegenläufige Mehrwellen-Druckaufbauschneckenmaschine ermöglicht in effektiver Weise einen kontinuierlichen und gleichmäßigen Druckaufbau für eine nachfolgende Granulierung.

Eine Aufbereitungsanlage nach Anspruch 14 gewährleistet das Aufbereiten einer homogenen Polymer-Füllstoff-Zusammensetzung mit einem hohen Anteil eines mineralischen Füllstoffs. Die Aufbereitungsanlage umfasst insbesondere eine Steuereinrichtung zum Steuern der Druckaufbaueinrichtung und/oder der Granuliereinrichtung. Die Granuliereinrichtung ist insbesondere derart ausgebildet und/oder derart von der Steuereinrichtung angesteuert, dass Granulat bzw. Granulatteilchen mit einem Durchmesser b und einer Länge c erzeugt wird. Für den Durchmesser b gilt insbesondere 2 mm ≤ b ≤ 12 mm, insbesondere 3 mm ≤ b ≤ 10 mm, und insbesondere 4 mm ≤ b ≤ 8 mm. Für die Länge c gilt insbesondere 0,5 mm ≤ c ≤ 4 mm, insbesondere 1 mm ≤ c ≤ 3 mm, und insbesondere 1,5 mm ≤ c ≤ 2 mm.

Dadurch, dass die erzeugten Granulatteilchen eine flache Struktur haben, also eine im Verhältnis zum Durchmesser b geringere Länge c haben, wird ein schnelles Abkühlen der schmelzeförmigen Polymer-Füllstoff-Zusammensetzung ermöglicht. Hierdurch wird eine hohe Qualität des Granulats gewährleistet, da im Inneren der Granulatteilchen Abbaureaktionen in Folge einer zu langen Hitzeeinwirkung vermieden werden. Durch den vergleichsweise geringen Druckaufbau mittels der Druckaufbaueinrichtung wird eine unerwünschte Kompaktierung der Polymer-Füllstoff-Zusammensetzung vermieden, wobei die Homogenität und somit die Qualität der Polymer-Füllstoff-Zusammensetzung erhalten bleibt.

Das erzeugte Granulat wird insbesondere nach der Granuliereinrichtung pneumatisch gefördert und gekühlt. Hierdurch wird in schneller Weise eine niedrige Temperatur des Granulats erreicht, vorzugsweise von weniger als 40°C.

Der Erfindung liegt ferner die Aufgabe zugrunde, ein Verfahren zu schaffen, dass das Aufbereiten einer homogenen Polymer-Füllstoff-Zusammensetzung, insbesondere einer Polyvinylchlorid-Füllstoff-Zusammensetzung, mit einem hohen Anteil eines mineralischen Füllstoffs ermöglicht.

Diese Aufgabe wird durch ein Verfahren mit den Merkmalen des Anspruchs 15 gelöst. Die Vorteile des erfindungsgemäßen Verfahrens entsprechen den bereits beschriebenen Vorteilen der erfindungsgemäßen Aufbereitungsanlage. Das Verfahren kann insbesondere mit mindestens einem Merkmal weitergebildet werden, das im Zusammenhang mit der Aufbereitungsanlage beschrieben ist.

Weitere Merkmale, Vorteile und Einzelheiten der Erfindung ergeben sich aus der nachfolgenden Beschreibung eines Ausführungsbeispiels. Es zeigen:
- Fig. 1: eine teilweise geschnittene Seitenansicht einer Aufbereitungsanlage mit einer Mehrwellen-Schneckenmaschine zum Aufbereiten einer Polymer-Füllstoff-Zusammensetzung, insbesondere einer Polyvinylchlorid-Füllstoff-Zusammensetzung, einer ersten Zuführeinrichtung zum Zuführen eines Polymers und eines ersten Anteils eines mineralischen Füllstoffs und einer zweiten Zuführeinrichtung zum Zuführen eines zweiten Anteils des mineralischen Füllstoffs,
- Fig. 2: eine teilweise geschnittene Seitenansicht der Aufbereitungsanlage mit einer in der Förderrichtung stromabwärts zu der Mehrwellen-Schneckenmaschine angeordneten Druckaufbaueinrichtung und einer Granuliereinrichtung,
- Fig. 3: eine teilweise geschnittene Draufsicht auf die MehrwellenSchneckenmaschine und die Zuführeinrichtungen in Fig. 1,
- Fig. 4: eine teilweise geschnittene Draufsicht auf die Druckaufbaueinrichtung und die Granuliereinrichtung in Fig. 2,
- Fig. 5: eine Schnittansicht durch die Mehrwellen-Schneckenmaschine und die erste Zuführeinrichtung entlang der Schnittlinie V-V in Fig. 3, und
- Fig. 6: eine Schnittansicht durch die Mehrwellen-Schneckenmaschine und die zweite Zuführeinrichtung entlang der Schnittlinie VI-VI in Fig. 3.

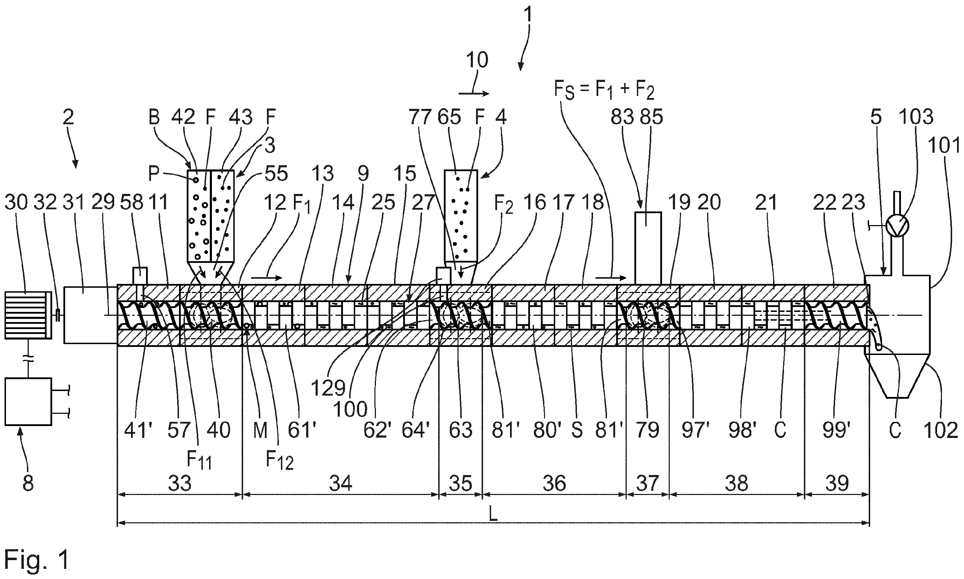

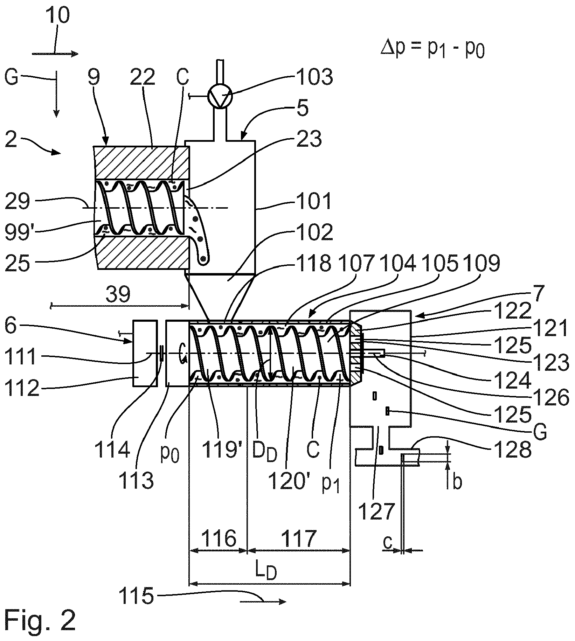

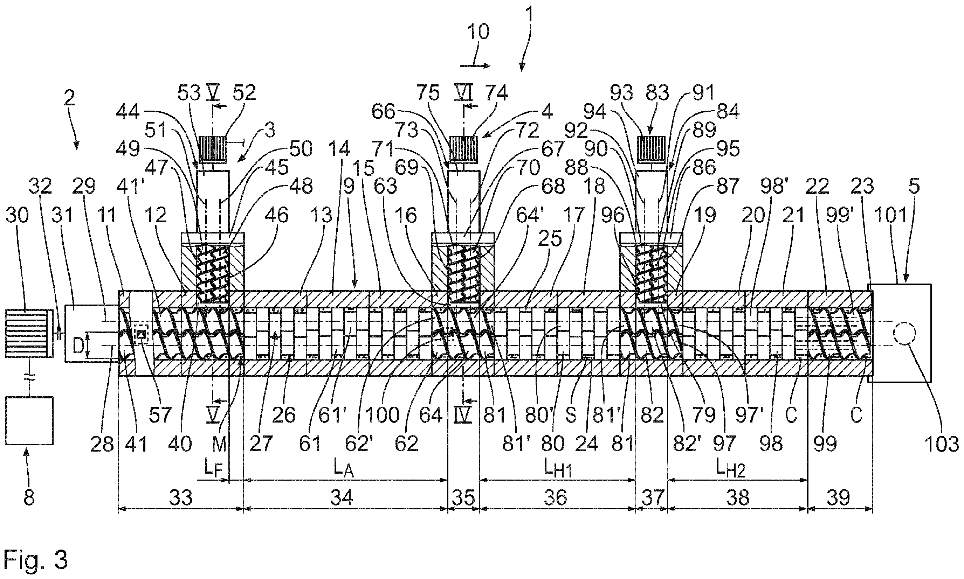

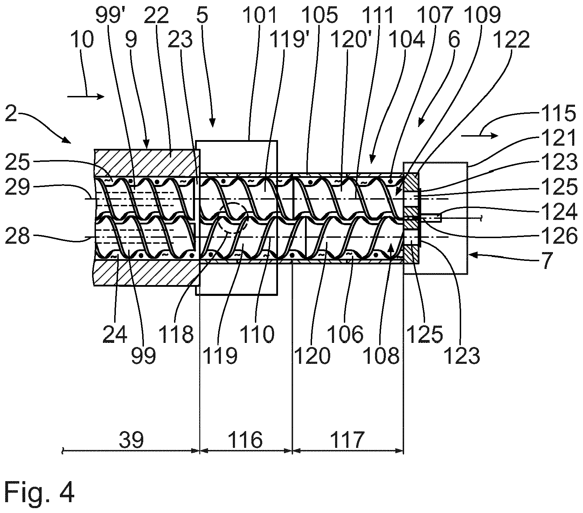

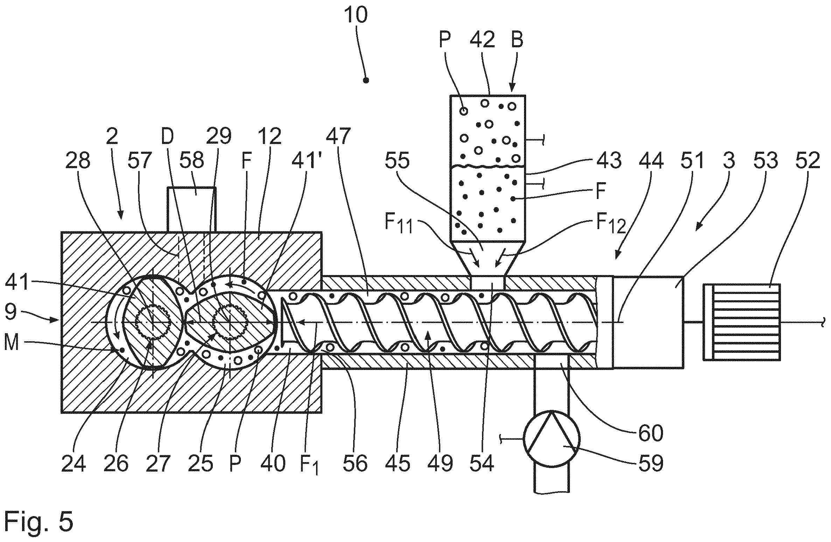

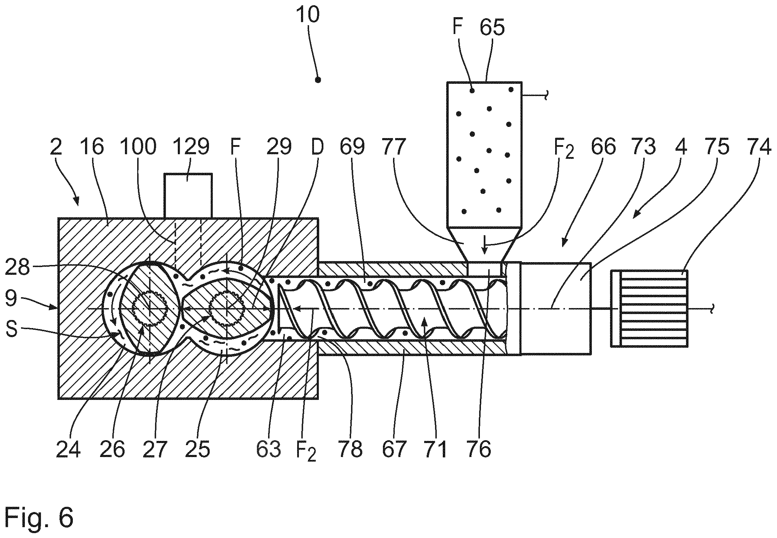

Die in den Fig. 1 bis 6 dargestellte Aufbereitungsanlage 1 dient zum kontinuierlichen Aufbereiten einer Polymer-Füllstoff-Zusammensetzung C, insbesondere einer Polyvinylchlorid-Füllstoff-Zusammensetzung, aus einem Polymer P, insbesondere aus Polyvinylchlorid, und einem mineralischen Füllstoff F. Die Polymer-Füllstoff-Zusammensetzung C ist insbesondere ein Polymer-Füllstoff-Masterbatch bzw. die Polyvinylchlorid-Füllstoff-Zusammensetzung ist insbesondere ein Polyvinylchlorid-Füllstoff-Masterbatch. Das Polyvinylchlorid (PVC) ist insbesondere ein Hart-Polyvinylchlorid (Hart-PVC). Der mineralische Füllstoff F ist beispielsweise Calciumcarbonat (CaCO₃) bzw. Kreide, Aluminiumhydroxid und/oder Talkum.

Die Aufbereitungsanlage 1 umfasst eine Mehrwellen-Schneckenmaschine 2, eine erste Zuführeinrichtung 3, eine zweite Zuführeinrichtung 4, eine Verbindungseinrichtung 5, eine Druckaufbaueinrichtung 6, eine Granuliereinrichtung 7 und eine Steuereinrichtung 8.

Die Mehrwellen-Schneckenmaschine 2 dient zum kontinuierlichen Aufbereiten der Polymer-Füllstoff-Zusammensetzung C aus dem Polymer P und dem mineralischen Füllstoff F. Die Mehrwellen-Schneckenmaschine 2 ist als gleichläufige Zweiwellen-Schneckenmaschine ausgebildet. Die Mehrwellen-Schneckenmaschine 2 umfasst ein Gehäuse 9, das aus mehreren in einer Förderrichtung 10 nacheinander angeordneten und miteinander verbundenen Gehäuseabschnitten 11 bis 22 aufgebaut ist. Der letzte Gehäuseabschnitt 22 bildet eine Austragsöffnung 23 aus. In dem Gehäuse 9 sind zwei zueinander parallele und einander durchdringende Gehäusebohrungen 24, 25 ausgebildet. Die Gehäusebohrungen 24, 25 haben im Querschnitt die Form einer liegenden Acht.

In den Gehäusebohrungen 24, 25 sind zwei Behandlungselementwellen 26, 27 angeordnet, die um zugehörige Drehachsen 28, 29 in gleichen Drehrichtungen drehantreibbar sind. Zum Drehantreiben umfasst die Mehrwellen-Schneckenmaschine 2 einen Antriebsmotor 30 und ein Verzweigungsgetriebe 31, zwischen denen eine Kupplung 32 angeordnet ist. Die Behandlungselementwellen 26, 27 werden mittels des Antriebsmotors 30 über das Verzweigungsgetriebe 31 in gleichen Drehrichtungen um die Drehachsen 28, 29 drehangetrieben.

Die Mehrwellen-Schneckenmaschine 2 bildet in der Förderrichtung 10 eine erste Einzugszone 33, eine Aufschmelzzone 34, eine zweite Einzugszone 35, eine erste Homogenisierungszone 36, eine Entgasungszone 37, eine zweite Homogenisierungszone 38 und eine Austragszone 39 aus.

In der ersten Einzugszone 33 ist in dem Gehäuse 9 eine erste Zuführöffnung 40 ausgebildet. Die erste Zuführöffnung 40 mündet seitlich in die Gehäusebohrungen 24, 25. Die erste Zuführöffnung 40 ist beispielsweise in dem Gehäuseabschnitt 12 ausgebildet. In der ersten Einzugszone 33 umfassen die Behandlungselementwellen 26, 27 Förderelemente 41, 41'.

Die erste Zuführeinrichtung 3 dient zum Zuführen des Polymers P und eines ersten Anteils F₁ des mineralischen Füllstoffs F in die erste Einzugszone 33. Die erste Zuführeinrichtung 3 umfasst einen ersten Dosierer 42, einen zweiten Dosierer 43 und eine erste Zuführschneckenmaschine 44.

Die erste Zuführschneckenmaschine 44 ist als zweiwellige Seitenbeschickungsmaschine ausgebildet. Die erste Zuführschneckenmaschine 44 umfasst ein Gehäuse 45, in dem zwei einander durchdringende Gehäusebohrungen 46, 47 ausgebildet sind. Die Gehäusebohrungen 46, 47 haben im Querschnitt die Form einer liegenden Acht. In den Gehäusebohrungen 46, 47 sind zwei Förderelementwellen 48, 49 angeordnet, die um zugehörige Drehachsen 50, 51 in gleichen Drehrichtungen drehantreibbar sind. Zum Drehantreiben umfasst die erste Zuführschneckenmaschine 44 einen Antriebsmotor 52 und ein Verzweigungsgetriebe 53. In dem Gehäuse 45 ist eine Zuführöffnung 54 ausgebildet, in die ein Zuführtrichter 55 mündet. Das Gehäuse 45 ist endseitig nicht abgeschlossen und bildet somit eine Beschickungsöffnung 56 aus, durch die sich die Förderelementwellen 48, 49 erstrecken. Das Gehäuse 45 ist mit dem Gehäuse 9 der Mehrwellen-Schneckenmaschine 2 verbunden, so dass die Beschickungsöffnung 56 in die erste Zuführöffnung 40 mündet. Die Förderelementwellen 48, 49 erstrecken sich in die erste Zuführöffnung 40.

Der erste Dosierer 42 dient zum Dosieren einer Vormischung B aus dem Polymer P und dem mineralischen Füllstoff F. Der erste Dosierer 42 ist gravimetrisch oder volumetrisch ausgebildet. Der erste Dosierer 42 mündet in den Zuführtrichter 55. Die Vormischung B ist pulverförmig. Die Vormischung B wird auch als Dryblend bezeichnet. Die Vormischung B enthält das Polymer P und einen Basisanteil F₁₁ des mineralischen Füllstoffs F. Für den Basisanteil F₁₁ gilt insbesondere: 1 phr ≤ F₁₁ ≤ 70 phr, insbesondere 10 phr ≤ F₁₁ ≤ 60 phr, insbesondere 20 phr ≤ F₁₁ ≤ 50 phr und insbesondere 30 phr ≤ F₁₁ ≤ 40 phr. Die Einheit "phr" ist eine Abkürzung für "parts per hundred resin" und definiert den Masseanteil des mineralischen Füllstoffs F in Bezug auf 100 Masseanteile des Polymers P.

Der zweite Dosierer 43 dient zum Dosieren eines Zusatzanteils F₁₂ des mineralischen Füllstoffs F. Der zweite Dosierer 43 ist gravimetrisch oder volumetrisch ausgebildet. Der zweite Dosierer 43 mündet in den Zuführtrichter 55. Für den Zusatzanteil F₁₂ gilt insbesondere: 10 phr ≤ F₁₂ ≤ 230 phr, insbesondere 70 phr ≤ F₁₂ ≤ 200 phr und insbesondere 90 phr ≤ F₁₂ ≤ 180 phr. Vorzugsweise gilt: F₁₁ ≤ F₁₂ ≤ 20 · F₁₁, insbesondere 2 · F₁₁ ≤ F₁₂ ≤ 15 · F₁₁, und insbesondere 3 · F₁₁ ≤ F₁₂ ≤ 10 · F₁₁.

Der von der ersten Zuführschneckenmaschine 44 zugeführte erste Anteil F₁ des mineralischen Füllstoffs F₁ ergibt sich somit zu: F₁ = F₁₁ + F₁₂. Für den ersten Anteil F₁ gilt insbesondere: 20 phr ≤ F₁ ≤ 300 phr, insbesondere 40 phr ≤ F₁ ≤ 250 phr, und insbesondere 50 phr ≤ F₁ ≤ 200 phr.

Zum Entgasen des Polymers P und des ersten Anteils F₁ des mineralischen Füllstoffs F ist in dem Gehäuse 9 der Mehrwellen-Schneckenmaschine 2 eine erste Entgasungsöffnung 57 ausgebildet. Die erste Entgasungsöffnung 57 ist in der Förderrichtung 10 stromaufwärts zu der ersten Zuführöffnung 40 ausgebildet. Die erste Entgasungsöffnung 57 ist beispielsweise in dem Gehäuseabschnitt 11 ausgebildet. Die Mehrwellen-Schneckenmaschine 2 umfasst eine erste Entgasungseinheit 58, die an die erste Entgasungsöffnung 57 angeschlossen ist. Die erste Entgasungseinheit 58 dient zum Absaugen bzw. Abführen von Gas, insbesondere von Luft, aus den Gehäusebohrungen 24, 25. Die erste Entgasungseinheit 58 ist beispielsweise als atmosphärische Entgasung bzw. atmosphärische Entlüftung ausgebildet.

Die erste Zuführeinrichtung 3 umfasst eine zweite Entgasungseinheit 59, die an eine zweite Entgasungsöffnung 60 angeschlossen ist. Die zweite Entgasungsöffnung 60 ist in dem Gehäuse 45 der ersten Zuführschneckenmaschine 44 ausgebildet. Die zweite Entgasungseinheit 59 dient zum Absaugen bzw. Abführen von Gas, insbesondere von Luft, aus den Gehäusebohrungen 46, 47.

Die Aufschmelzzone 34 dient zum Aufschmelzen des Polymers P und zum Einmischen des ersten Anteils F₁ des mineralischen Füllstoffs F in das aufgeschmolzene Polymer P bzw. die Polymerschmelze. In der Aufschmelzzone 34 weisen die Behandlungselementwellen 26, 27 Knetelement 61, 61' und Förderelemente 62, 62' auf. Die Knetelemente 61, 61' umfassen insbesondere Knetblöcke mit mehreren einteilig miteinander verbundenen Knetscheiben und/oder einzelne Knetscheiben. Die Aufschmelzzone 34 beginnt mit einem in der Förderrichtung 10 ersten Knetelement 61, 61' und endet bei einer zweiten Zuführöffnung 63. Die zweite Zuführöffnung 63 ist nachfolgend im Detail erläutert.

Die Behandlungselementwellen 26, 27 haben einen Außendurchmesser D. Der Außendurchmesser D ist insbesondere ein maximaler Außendurchmesser.

Die Behandlungselementwellen 26, 27 haben zwischen der ersten Zuführöffnung 40 und dem ersten Knetelement 61, 61' der Aufschmelzzone 34 eine Länge L_{F}. Für ein Verhältnis L_{F}/D gilt insbesondere: 2 ≤ L_{F}/D ≤ 7, insbesondere 3 ≤ L_{F}/D ≤ 6, und insbesondere 4 ≤ L_{F}/D ≤ 5.

Die Behandlungselementwellen 26, 27 haben in der Aufschmelzzone 34 eine Länge L_{A}. Für ein Verhältnis L_{A}/D gilt insbesondere: 6 ≤ L_{A}/D ≤ 14, insbesondere 7 ≤ L_{A}/D ≤ 13, und insbesondere 8 ≤ L_{A}/D ≤ 12.

Die Mehrwellen-Schneckenmaschine 2 weist in der zweiten Einzugszone 35 eine zweite Zuführöffnung 63 auf Die zweite Zuführöffnung 63 ist in der Förderrichtung 10 stromabwärts zu der ersten Zuführöffnung 40 angeordnet. Die zweite Zuführöffnung 63 ist seitlich in dem Gehäuse 9, beispielsweise in dem Gehäuseabschnitt 16, ausgebildet und mündet in die Gehäusebohrungen 24, 25. Die Aufschmelzzone 34 ist somit zwischen der ersten Zuführöffnung 40 und der zweiten Zuführöffnung 63 ausgebildet.

Die zweite Zuführeinrichtung 4 dient zum Zuführen eines zweiten Anteils F₂ des mineralischen Füllstoff F in die Mehrwellen-Schneckenmaschine 2. Hierzu mündet die zweite Zuführeinrichtung 4 in die zweite Zuführöffnung 63. In der zweiten Einzugszone 35 weisen die Behandlungselementwellen 26, 27 Förderelemente 64, 64'. Für den zweiten Anteil F₂ gilt insbesondere: 300 phr ≤ F₂ ≤ 1100 phr, insbesondere 400 phr ≤ F₂ ≤ 1000 phr, und insbesondere 500 ≤ F₂ ≤ 900 phr. Es gilt insbesondere: F₁ < F₂ ≤ 20 · F₁, insbesondere 2 · F₁ ≤ F₂ ≤ 10 · F₁, und insbesondere 3 · F₁ ≤ F₂ ≤ 5 · F₁.

Die zweite Zuführeinrichtung 4 umfasst einen dritten Dosierer 65 und eine zweite Zuführschneckenmaschine 66. Die zweiten Zuführschneckenmaschine 66 ist insbesondere als zweiwellige Seitenbeschickungsmaschine ausgebildet. Die zweite Zuführschneckenmaschine 66 umfasst ein Gehäuse 67, in dem zwei Gehäusebohrungen 68, 69 ausgebildet sind. In den Gehäusebohrungen 68, 69 sind zwei Förderelementwellen 70, 71 angeordnet, die um zugehörige Drehachsen 72, 73 in gleichen Drehrichtungen drehantreibbar sind. Zum Drehantreiben umfasst die zweite Zuführschneckenmaschine 66 einen Antriebsmotor 74 und ein Verzweigungsgetriebe 75. Die Förderelementwellen 70, 71 werden mittels des Antriebsmotors 74 über das Verzweigungsgetriebe 75 in gleichen Drehrichtungen um die Drehachsen 72, 73 drehangetrieben. In dem Gehäuse 67 ist eine Zuführöffnung 76 ausgebildet, in die ein Zuführtrichter 77 mündet. Der dritte Dosierer 65 ist gravimetrisch oder volumetrisch ausgebildet. Der dritte Dosierer 65 mündet in den Zuführtrichter 77. Das Gehäuse 67 ist nicht abgeschlossen und bildet eine Beschickungsöffnung 78 aus. Die Beschickungsöffnung 78 mündet in die zweite Zuführöffnung 63. Hierzu ist das Gehäuse 67 an das Gehäuse 9 der Mehrwellen-Schneckenmaschine 2 angeschlossen. Die Förderelementwellen 70, 71 stehen über das Gehäuse 67 über und erstrecken sich in die zweite Zuführöffnung 63.

Die zweite Zuführeinrichtung 4 bzw. die zweite Zuführschneckenmaschine 66 kann entsprechend der ersten Zuführschneckenmaschine 44 eine Entgasungsöffnung umfassen, an die eine Entgasungseinheit angeschlossen ist. Auf die entsprechenden Ausführungen wird verwiesen.

Die erste Homogenisierungszone 36 dient zum Einmischen des zweiten Anteils F₂ des mineralischen Füllstoffs F in das aufgeschmolzene Polymer P und den bereits eingemischten ersten Anteil F₁ des mineralischen Füllstoffs F. Die erste Homogenisierungszone 36 erstreckt sich in der Förderrichtung 10 von der zweiten Zuführöffnung 63 bis zu einer dritten Entgasungsöffnung 79. Die dritte Entgasungsöffnung 79 ist nachfolgend im Detail erläutert. In der ersten Homogenisierungszone 36 umfassen die Behandlungselementwellen 26, 27 Knetelemente 80, 80' und Förderelemente 81, 81'. Die Knetelemente 80, 80' umfassen insbesondere Knetblöcke mit mehreren einteilig miteinander verbundenen Knetscheiben und/oder einzelne Knetscheiben. Die erste Homogenisierungszone 36 hat in der Förderrichtung 10 eine Länge L_{H1}. Für ein Verhältnis L_{H1}/D gilt insbesondere: 4 ≤ L_{H1}/D ≤ 12, insbesondere 5 ≤ L_{H1}/D ≤ 11, und insbesondere 6 ≤ L_{H1}/D ≤ 10.

Die Entgasungszone 37 dient zum Entgasen des zweiten Anteils F₂ des mineralischen Füllstoffs F. Der mineralische Füllstoff F wird pulverförmig durch die zweite Zuführöffnung 63 in die Gehäusebohrungen 24, 25 zugeführt. Die Entgasungszone 37 dient insbesondere zum Abführen von Luft aus dem zweiten Anteil F₂ des mineralischen Füllstoffes F und aus den Gehäusebohrungen 24, 25.

Die dritte Entgasungsöffnung 79 ist in der Entgasungszone 37 in dem Gehäuse 9 ausgebildet. Die dritte Entgasungsöffnung 79 ist somit in der Förderrichtung 10 stromabwärts zu der zweiten Zuführöffnung 63 angeordnet. Die dritte Entgasungsöffnung 79 ist seitlich in dem Gehäuse 9 ausgebildet, beispielsweise in dem Gehäuseabschnitt 19. In der Entgasungszone 37 umfassen die Behandlungselementwellen 26, 27 Förderelemente 82, 82'.

Die Mehrwellen-Schneckenmaschine 2 umfasst eine dritte Entgasungseinheit 83, die an die dritte Entgasungsöffnung 79 angeschlossen ist. Die dritte Entgasungseinheit 83 umfasst eine Entgasungsschneckenmaschine 84 und einen Unterdruckerzeuger 85. Die Entgasungsschneckenmaschine 84 ist insbesondere als zweiwellige Seitenentgasungsmaschine ausgebildet. Die Entgasungsschneckenmaschine 84 umfasst ein Gehäuse 86, in dem zwei einander durchdringende Gehäusebohrungen 87, 88 ausgebildet sind. Die Gehäusebohrungen 87, 88 haben im Querschnitt die Form einer liegenden Acht. In den Gehäusebohrungen 87, 88 sind zwei Förderelementwellen 89, 90 angeordnet, die um zugehörige Drehachsen 91, 92 in gleichen Drehrichtungen drehantreibbar sind. Zum Drehantreiben umfasst die Entgasungsschneckenmaschine 84 einen Antriebsmotor 93 und ein Verzweigungsgetriebe 94. Die Förderelementwellen 89, 90 werden mittels des Antriebsmotor 93 über das Verzweigungsgetriebe 94 in gleichen Drehrichtungen um die Drehachsen 91, 92 drehangetrieben. In dem Gehäuse 86 ist eine Absaugöffnung 95 ausgebildet. Der Unterdruckerzeuger 85 ist an die Absaugöffnung 95 angeschlossen. Das Gehäuse 86 ist nicht abgeschlossen und bildet eine Verbindungsöffnung 96 aus. Die Verbindungsöffnung 96 mündet in die dritte Entgasungsöffnung 79. Hierzu ist das Gehäuse 86 an das Gehäuse 9 der Mehrwellen-Schneckenmaschine 2 angeschlossen. Die Förderelementwellen 89, 90 erstrecken sich durch die Verbindungsöffnung 96 in die dritte Entgasungsöffnung 79 hinein.

Zusätzlich weist die Mehrwellen-Schneckenmaschine 2 in der zweiten Einzugszone 35 eine vierte Entgasungsöffnung 100 auf, die in der Förderrichtung 10 stromaufwärts zu der zweiten Zuführöffnung 63 in dem Gehäuse 9 bzw. dem Gehäuseabschnitt 16 ausgebildet ist. Die Mehrwellen-Schneckenmaschine 2 umfasst eine vierte Entgasungseinheit 129, die an die vierte Entgasungsöffnung 100 angeschlossen ist. Die vierte Entgasungseinheit 129 dient zum Absaugen bzw. Abführen von Gas, insbesondere von Luft, und/oder zum Abführen von Gas bzw. Luft aus dem zweiten Anteil F₂ des mineralischen Füllstoffs F. Die vierte Entgasungseinheit 129 ist insbesondere als atmosphärische Entgasung bzw. atmosphärische Entlüftung ausgebildet.

Die zweite Homogenisierungszone 38 dient zum weiteren Einmischen des zweiten Anteil F₂ des mineralischen Füllstoffs F in das aufgeschmolzene Polymer P und den bereits eingemischten ersten Anteil F₁ des mineralischen Füllstoffs F und zum Homogenisieren. Das weitere Einmischen und Homogenisieren erfolgt insbesondere nach dem Entgasen des zweiten Anteils F₂ des mineralischen Füllstoffs F. Das weitere Einmischen und Homogenisieren erfolgt insbesondere nach dem Abführen von Luft aus den Gehäusebohrungen 24, 25. Die zweite Homogenisierungszone 38 ist in der Förderrichtung 10 stromabwärts zu der Entgasungszone 37 bzw. der dritten Entgasungsöffnung 79 angeordnet. Die zweite Homogenisierungszone 38 ist ferner in der Förderrichtung 10 stromabwärts zu der ersten Homogenisierungszone 36 angeordnet. Die Behandlungselementwellen 26, 27 umfassen in der zweiten Homogenisierungszone 38 Förderelemente 97, 97' und Knetelemente 98, 98'. Die Knetelement 98, 98' umfassen insbesondere Knetblöcke mit mehreren einteilig miteinander verbundenen Knetscheiben und/oder einzelne Knetscheiben. Die zweite Homogenisierungszone 38 beginnt nach der dritten Entgasungsöffnung 79 und endet mit dem in der Förderrichtung 10 letzten Knetelement 98, 98'. Die zweite Homogenisierungszone 38 hat in der Förderrichtung 10 eine Länge L_{H2}. Für ein Verhältnis L_{H2}/D gilt insbesondere: 2 ≤ L_{H2}/D ≤ 8, insbesondere 3 ≤ L_{H2}/D ≤ 7, und insbesondere 4 ≤ L_{H2}/D ≤ 6.

Die Austragszone 39 dient zum Austragen der erzeugten Polymer-Füllstoff-Zusammensetzung C. Die Polymer-Füllstoff-Zusammensetzung C hat in der Austragszone 39 einen hohen Anteil Fₛ des mineralischen Füllstoffs F, der in dem aufgeschmolzenen Polymer P homogen eingemischt ist. Der Gesamtanteil Fₛ ergibt sich zu: Fₛ = F₁ + F₂. Für den Gesamtanteil Fₛ gilt insbesondere: 350 phr ≤ Fₛ ≤ 1400 phr, insbesondere 450 phr ≤ Fₛ ≤ 1300 phr, und insbesondere 550 phr ≤ Fₛ ≤ 1200 phr.

In der Austragszone 39 umfassen die Behandlungselementwellen 26, 27 Förderelemente 99, 99'. Die Förderelemente 99, 99' dienen zum im Wesentlichen drucklosen Austragen der Polymer-Füllstoff-Zusammensetzung C durch die Austragsöffnung 23.

Die Behandlungselementwellen 26, 27 haben in der Förderrichtung 10 eine Gesamtlänge L. Für ein Verhältnis L/D der Gesamtlänge L zu dem Außendurchmesser D gilt insbesondere: 32 ≤ L/D ≤ 56, insbesondere 34 ≤ L/D ≤ 44, und insbesondere 36 ≤ L/D ≤ 40.

Die Mehrwellen-Schneckenmaschine 2 ist mittels der Verbindungseinrichtung 5 mit der Druckaufbaueinrichtung 6 verbunden. Die Verbindungseinrichtung 5 umfasst ein Verbindungselement 101, das als geschlossener Schacht ausgebildet ist. Das Verbindungselement 101 ist mit dem Gehäuse 9 und einem Zuführtrichter 102 der Druckaufbaueinrichtung 6 verbunden. Die Verbindungseinrichtung 5 umfasst eine Entgasungseinheit 103, die an das Verbindungselement 101 bzw. eine Entgasungsöffnung des Verbindungselements 101 angeschlossen ist.

Die Druckaufbaueinrichtung 6 dient zur Erhöhung eines Drucks p der Polymer-Füllstoff-Zusammensetzung C. Die Druckaufbaueinrichtung 6 ist in der Förderrichtung 10 nach der Mehrwellen-Schneckenmaschine 2 angeordnet.

Die Druckaufbaueinrichtung 6 umfasst eine Druckaufbauschneckenmaschine 104. Die Druckaufbauschneckenmaschine 104 ist als gegenläufige Mehrwellen-Druckaufbauschneckenmaschine ausgebildet, insbesondere als gegenläufige Zweiwellen-Druckaufbauschneckenmaschine. Die Druckaufbauschneckenmaschine 104 umfasst ein Gehäuse 105, in dem zwei einander durchdringende Gehäusebohrungen 106, 107 ausgebildet sind. Die Gehäusebohrungen 106, 107 haben im Querschnitt die Form einer liegenden Acht. In den Gehäusebohrungen 106, 107 sind Druckaufbauwellen 108, 109 angeordnet, die um zugehörige Drehachsen 110, 111 in entgegengesetzten Drehrichtungen drehantreibbar sind. Zum Drehantreiben umfasst die Druckaufbaueinrichtung 6 einen Antriebsmotor 112 und ein Verzweigungsgetriebe 113. Zwischen dem Antriebsmotor 112 und dem Verzweigungsgetriebe 113 ist eine Kupplung 114 angeordnet. Die Druckaufbauwellen 108, 109 sind mittels des Antriebsmotors 112 über das Verzweigungsgetriebe 113 und die Kupplung 114 in entgegengesetzten Drehrichtungen um die Drehachsen 110, 111 drehantreibbar.

Die Druckaufbauschneckenmaschine 104 bildet in einer Förderrichtung 115 eine Einzugszone 116 und eine Druckaufbauzone 117 aus. In der Einzugszone 116 ist in dem Gehäuse 105 eine Zuführöffnung 118 ausgebildet. In die Zuführöffnung 118 mündet der Zuführtrichter 102. Die Austragsöffnungen 100 der Mehrwellen-Schneckenmaschine 2 sind in Bezug auf die Richtung G der Schwerkraft oberhalb der Zuführöffnung 118 angeordnet. Hierdurch fällt die Polymer-Füllstoff-Zusammensetzung C nach dem Austritt aus der Austragsöffnung 23 aufgrund der Schwerkraft in den Zuführtrichter 102.

In der Einzugszone 116 umfassen die Druckaufbauwellen 108, 109 Förderelemente 119, 119'. Die Polymer-Füllstoff-Zusammensetzung C hat beim Eintritt in die Einzugszone 116 einen ersten Druck p₀. In der Einzugszone 116 wird die Polymer-Füllstoff-Zusammensetzung C zu der Druckaufbauzone 117 gefördert.

In der Druckaufbauzone 117 wird der Druck p₀ der Polymer-Füllstoff-Zusammensetzung C erhöht. An einem stromabwärtigen Ende der Druckaufbauzone 117 weist die Polymer-Füllstoff-Zusammensetzung C einen Druck p₁ auf. Für eine Druckerhöhung Δp gilt: Δp = p₁ - p₀. In der Druckaufbauzone 117 weisen die Druckaufbauwellen 108, 109 Druckaufbauelemente 120, 120' auf, die insbesondere als Förderelemente ausgebildet sind.

Die Druckaufbauschneckenmaschine 104 weist somit ausschließlich die Einzugszone 116 und die Druckaufbauzone 117 auf.

Für die Druckerhöhung Δp gilt insbesondere: 1 bar ≤ Δp ≤ 100 bar, insbesondere 2 bar ≤ Δp ≤ 80 bar und insbesondere 3 bar ≤ Δp ≤ 60 bar.

Für den Druck p₀ gilt insbesondere: p₀ ≈ pₐₜₘ, wobei pₐₜₘ den atmosphärischen Druck bezeichnet, der ca. 1 bar beträgt.

Für den Druck p₁ gilt insbesondere: 1 bar ≤ p₁ ≤ 100 bar, insbesondere 2 bar ≤ p₁ ≤ 80 bar und insbesondere 3 bar ≤ p₁ ≤ 60 bar.

Die zwei Druckaufbauwellen 108, 109 haben in der Förderrichtung 115 eine Länge L_{D} und einen Außendurchmesser D_{D}. Der Außendurchmesser D_{D} ist insbesondere ein maximaler Außendurchmesser. Für ein Verhältnis L_{D}/D_{D} gilt insbesondere: 3 ≤ L_{D}/D_{D} ≤ 10, insbesondere 4 ≤ L_{D}/D_{D} ≤ 9, und insbesondere 5 ≤ L_{D}/D_{D} ≤ 8.

Die Granuliereinrichtung 7 ist in der Förderrichtung 10 bzw. in der Förderrichtung 115 nach der Druckaufbaueinrichtung 6 angeordnet. Die Granuliereinrichtung 7 umfasst ein Granuliergehäuse 121, eine Lochplatte 122, Granuliermesser 123 und einen Antrieb 124. Die Lochplatte 122 ist mit dem Gehäuse 105 der Druckaufbauschneckenmaschine 104 verbunden. Die Lochplatte 122 schließt das Gehäuse 105 somit ab. Die Lochplatte 122 weist eine Vielzahl von Durchgangsöffnungen 125 auf. Die Durchgangsöffnungen 125 dienen zur Erzeugung von Strängen aus der Polymer-Füllstoff-Zusammensetzung C. An der der Druckaufbauschneckenmaschine 104 abgewandten Seite der Lochplatte 122 sind die Granuliermesser 123 angeordnet. Die Granuliermesser 123 sind mittels des Antriebs 124 um eine zugehörige Drehachse 126 drehantreibbar. Durch die Rotation der Granuliermesser 123 werden die Stränge der Polymer-Füllstoff-Zusammensetzung C in Granulatteilchen G geschnitten. Das Granuliergehäuse 121 umgibt die Lochplatte 122, die Granuliermesser 123 und den Antrieb 124. Das Granuliergehäuse 121 ist mit dem Gehäuse 105 der Druckaufbauschneckenmaschine 104 verbunden. Das Granuliergehäuse 121 weist eine Abführöffnung 127 auf. Die Abführöffnung 127 dient zum Abtransportieren der Granulatteilchen G. Die Abführöffnung 127 ist mit einer Transportleitung 128 verbunden. Die Transportleitung 128 dient zum pneumatischen Abtransport der Granulatteilchen G.

Die Steuereinrichtung 8 dient zum Steuern der Aufbereitungsanlage 1 und ist insbesondere in Signalverbindung mit der Mehrwellen-Schneckenmaschine 2, der ersten Zuführeinrichtung 3, der zweiten Zuführeinrichtung 4, der Verbindungseinrichtung 5, der Druckaufbaueinrichtung 6 und der Granuliereinrichtung 7.

Die Funktionsweise der Aufbereitungsanlage 1 ist wie folgt:
Der erste Dosierer 42 dosiert die Vormischung B in den Zuführtrichter 55 der ersten Zuführschneckenmaschine 44. Die Vormischung B enthält das Polymer P und den Basisanteil F₁₁ des mineralischen Füllstoffs F. Der Durchsatz des ersten Dosierers 42 beträgt beispielsweise zwischen 20 kg/h und 200 kg/h. Zeitgleich dosiert der zweite Dosierer 43 den Zusatzanteil F₁₂ des mineralischen Füllstoffs F in den Zuführtrichter 55 der ersten Zuführschneckenmaschine 44. Der Durchsatz des zweiten Dosierers 43 beträgt beispielsweise zwischen 10 kg/h und 100 kg/h. Die Vormischung B und der mineralische Füllstoff F sind pulverförmig.

Durch die Zuführöffnung 54 gelangt die Vormischung B und der zusätzliche mineralische Füllstoff F in die Gehäusebohrungen 46, 47. In den Gehäusebohrungen 46, 47 befindliche Luft und/oder Luft, die durch das Zuführen der Vormischung B und des zusätzlichen mineralischen Füllstoffs F in die Gehäusebohrungen 46, 47 eingetragen wird, wird mittels der zweiten Entgasungseinheit 59 durch die zweite Entgasungsöffnung 60 abgeführt. Die Vormischung B und der zusätzliche mineralische Füllstoff F werden mittels der Förderelementwellen 48, 49 zu der Beschickungsöffnung 56 gefördert und während des Förderns zumindest teilweise zu einer Mischung M miteinander vermischt.

Die Mischung M wird durch die erste Zuführöffnung 40 in die Gehäusebohrungen 24, 25 der Mehrwellen-Schneckenmaschine 2 zugeführt. In den Gehäusebohrungen 24, 25 befindliche Luft und/oder in der Mischung M enthaltene Luft wird mittels der ersten Entgasungseinheit 58 durch die erste Entgasungsöffnung 57 abgeführt.

In der ersten Einzugszone 33 wird die zugeführte Mischung M in der Förderrichtung 10 zu der Aufschmelzzone 34 gefördert. In der Aufschmelzzone 34 wird das Polymer P zu einer Polymerschmelze S aufgeschmolzen. In der Aufschmelzzone 34 wird die Polymerschmelze S mit dem ersten Anteil F₁ des mineralischen Füllstoffs F vermischt.

In der zweiten Einzugszone 35 wird der zweite Anteil F₂ des mineralischen Füllstoffs F durch die zweite Zuführöffnung 63 in die Gehäusebohrungen 24, 25 zugeführt. Hierzu wird der mineralische Füllstoff F mittels des dritten Dosierers 65 in die zweite Zuführschneckenmaschine 66 zugeführt. Der dritte Dosierer 65 wird beispielsweise mit einem Durchsatz zwischen 60 kg/h und 600 kg/h betrieben. Der zweite Anteil F₂ des mindestens einen mineralischen Füllstoffs F wird pulverförmig zugeführt. Der zweite Anteil F₂ des mineralischen Füllstoffs F gelangt über den Zuführtrichter 77 und die Zuführöffnung 76 in die Gehäusebohrungen 68, 69 und wird mittels der Förderelementwellen 70, 71 durch die Beschickungsöffnung 78 und die zweite Zuführöffnung 63 in die Mehrwellen-Schneckenmaschine 2 zugeführt. In den Gehäusebohrungen 68, 69 befindliche Luft und/oder Luft, die durch das Zuführen des zweiten Anteils F₂ des mineralischen Füllstoffs F in die Gehäusebohrungen 68, 69 eingetragen wird, und/oder in den Gehäusebohrungen 24, 25 befindliche Luft wird mittels der vierten Entgasungseinheit 129 durch die vierte Entgasungsöffnung 100 abgeführt.

In der ersten Homogenisierungszone 36 wird der zweite Anteil F₂ des mineralischen Füllstoffs F in die Polymerschmelze S und den darin bereits eingemischten ersten Anteil F₁ des mineralischen Füllstoffs F eingemischt. Luft, die sich in den Gehäusebohrungen 24, 25 befindet, und/oder Luft, die über den zweiten Anteil F₂ des mineralischen Füllstoffs F in die Gehäusebohrungen 24, 25 eingetragen wurde, wird in der Förderrichtung 10 zu der Entgasungszone 37 gedrückt und durch die dritte Entgasungsöffnung 79 mittels der dritten Entgasungseinheit 83 abgeführt. Die Entgasungsschneckenmaschine 84 gewährleistet, dass die Polymerschmelze S mit dem darin eingemischten mineralischen Füllstoff F nicht durch die dritte Entgasungsöffnung 79 entweicht. Hierzu fördern die Förderelementwellen 89, 90 zu der dritten Entgasungsöffnung 79, so dass die Polymerschmelze S und der darin eingemischte mineralische Füllstoffs F nicht durch die dritte Entgasungsöffnung 79 entweichen kann. Gleichzeitig wird die Luft mittels des Unterdruckerzeugers 85, der beispielsweise als Vakuumpumpe ausgebildet ist, durch die dritte Entgasungsöffnung 79 und die Gehäusebohrungen 87, 88 über die Absaugöffnung 95 abgesaugt.

In der zweiten Homogenisierungszone 38 erfolgt nochmals eine Durchmischung und Homogenisierung der Polymerschmelze S und des mineralischen Füllstoffs F. Am Ende der zweiten Homogenisierungszone 38 liegt die Polymer-Füllstoff-Zusammensetzung C vor. Die Polymer-Füllstoff-Zusammensetzung C ist homogen und hat den hohen Gesamtanteil Fₛ des mineralischen Füllstoffs F. Der Gesamtanteil Fₛ ergibt sich zu: Fₛ = F₁ + F₂.

In der Austragszone 39 wird die Polymer-Füllstoff-Zusammensetzung C im Wesentlichen drucklos durch die Austragsöffnungen 100 der Austragsplatte 23 ausgetragen.

Die Polymer-Füllstoff-Zusammensetzung C wird über die Verbindungseinrichtung 5 in den Zuführtrichter 102 der Druckaufbaueinrichtung 6 zugeführt. Das Verbindungselement 101 ist als geschlossener Schacht ausgebildet, der mittels der Entgasungseinheit 103 entgast wird, so dass beim Zuführen der Polymer-Füllstoff-Zusammensetzung C in die Druckaufbaueinrichtung 6 keine Luft eingebracht wird.

Durch den Zuführtrichter 102 und die Zuführöffnung 118 gelangt die Polymer-Füllstoff-Zusammensetzung C in die gegenläufige Zweiwellen-Druckaufbauschneckenmaschine 104. In der Einzugszone 116 wird die Polymer-Füllstoff-Zusammensetzung C zu der Druckaufbauzone 117 gefördert. Die Druckaufbauwellen 108, 109 werden mittels des Antriebsmotors 112 über das Verzweigungsgetriebe 113 in entgegengesetzten Drehrichtungen um die Drehachsen 110, 111 drehangetrieben. Dadurch, dass die gegenläufige Zweiwellen-Druckaufbauschneckenmaschine 104 eine Kammerförderung aufweist, die in sich abgeschlossen ist, ist eine Rückströmung bzw. Leckageströmung der Polymer-Füllstoff-Zusammensetzung C in den Gehäusebohrungen 106, 107 minimal. Hierdurch ist in der Druckaufbauzone 117 ein guter Druckaufbau möglich, ohne dass in unerwünschter Weise mechanische Energie in die scherempfindliche Polymer-Füllstoff-Zusammensetzung C eingetragen wird. In der gegenläufigen Zweiwellen-Druckaufbauschneckenmaschine 104 erfolgt die Druckerhöhung Δp, so dass am Ende der Druckaufbauzone 117 die Polymer-Füllstoff-Zusammensetzung C den Druck p₁ hat.

Die Polymer-Füllstoff-Zusammensetzung C wird aus der Druckaufbauschneckenmaschine 104 durch die Lochplatte 122 der Granuliereinrichtung 7 ausgetragen. Durch die Durchgangsöffnungen 125 der Lochplatte 122 werden Stränge der Polymer-Füllstoff-Zusammensetzung C erzeugt, die mittels der rotierenden Granuliermesser 123 zu Granulatteilchen G geschnitten werden. Die Granulatteilchen G werden durch die Abführöffnung 127 aus dem Granuliergehäuse 121 abgeführt und über die Transportleitung 128 pneumatisch abtransportiert und gekühlt.

Die Steuereinrichtung steuert die Druckaufbaueinrichtung 6 und die Granuliereinrichtung 7 derart an, dass die Granulatteilchen G den Durchmesser b und die Länge c haben. Die Granulatteilchen G haben insbesondere eine flache Struktur, also einen großen Durchmesser b im Verhältnis zu der Länge c, so dass die Granulatteilchen G schnell abkühlen und verfestigen. Hierdurch wird eine hohe Qualität der granulierten Polymer-Füllstoff-Zusammensetzung C gewährleistet.

Dadurch, dass die Polymer-Füllstoff-Zusammensetzung C einen hohen Anteil bzw. Gesamtanteil Fₛ des mineralischen Füllstoffs F hat, können Produkte mit verbesserten mechanischen Eigenschaften hergestellt werden. Zudem kann für die Herstellung der Produkte die Menge des Polymers P reduziert werden, wodurch Kosten verringert werden und die Nachhaltigkeit gesteigert wird. Das Polymer P ist insbesondere Polyvinylchlorid (PVC), insbesondere ein Hart-Polyvinylchlorid (Hart-PVC). Der mineralische Füllstoff F ist insbesondere Calciumcarbonat. Die Zusammensetzung ist insbesondere ein Masterbatch.

## Patentansprüche

1. Aufbereitungsanlage zum Aufbereiten einer Polymer-Füllstoff-Zusammensetzung, insbesondere einer Polyvinylchlorid-Füllstoff-Zusammensetzung, umfassend
- eine Mehrwellen-Schneckenmaschine (2) zum Aufbereiten der Polymer-Füllstoff-Zusammensetzung (C) aus einem Polymer (P) und einem mineralischen Füllstoff (F),
- eine erste Zuführeinrichtung (3) zum Zuführen des Polymers (P) und eines ersten Anteils (F₁) des mineralischen Füllstoffs (F) in die Mehrwellen-Schneckenmaschine (2),
**gekennzeichnet**
**durch** eine zweite Zuführeinrichtung (4) zum Zuführen eines zweiten Anteils (F₂) des mineralischen Füllstoffs (F) in die Mehrwellen-Schneckenmaschine (2).

2. Aufbereitungsanlage nach Anspruch 1, **dadurch gekennzeichnet,**
**dass** die Mehrwellen-Schneckenmaschine (2) eine erste Zuführöffnung (40) und eine in einer Förderrichtung (10) stromabwärts angeordnete zweite Zuführöffnung (63) umfasst,
**dass** die erste Zuführeinrichtung (3) in die erste Zuführöffnung (40) mündet und die zweite Zuführeinrichtung (4) in die zweite Zuführöffnung (63) mündet.

3. Aufbereitungsanlage nach Anspruch 1 oder 2, **dadurch gekennzeichnet,**
**dass** die Mehrwellen-Schneckenmaschine (2) eine erste Zuführöffnung (40) und eine in einer Förderrichtung (10) stromabwärts angeordnete zweite Zuführöffnung (63) umfasst,
**dass** die Mehrwellen-Schneckenmaschine (2) zwischen der ersten Zuführöffnung (40) und der zweiten Zuführöffnung (63) eine Aufschmelzzone (34) zum Aufschmelzen des Polymers (P) ausbildet.

4. Aufbereitungsanlage nach mindestens einem der vorangegangenen Ansprüche, **dadurch gekennzeichnet,**
**dass** die erste Zuführeinrichtung (3) eine erste Zuführschneckenmaschine (44) umfasst.

5. Aufbereitungsanlage nach mindestens einem der vorangegangenen Ansprüche, **dadurch gekennzeichnet,**
**dass** die erste Zuführeinrichtung (3) einen ersten Dosierer (42) zum Dosieren einer Vormischung (B) aus dem Polymer (P) und dem mineralischen Füllstoff (F) und einen zweiten Dosierer (43) zum Dosieren des mineralischen Füllstoffs (F) umfasst.

6. Aufbereitungsanlage nach mindestens einem der vorangegangenen Ansprüche, **dadurch gekennzeichnet,**
**dass** die Mehrwellen-Schneckenmaschine (2) und/oder die erste Zuführeinrichtung (3) mindestens eine Entgasungsöffnung (57, 60) zum Entgasen des Polymers (P) und des ersten Anteils (F₁) des mineralischen Füllstoffs (F) umfasst.

7. Aufbereitungsanlage nach mindestens einem der vorangegangenen Ansprüche, **dadurch gekennzeichnet,**
**dass** die zweite Zuführeinrichtung (4) eine zweite Zuführschneckenmaschine (66) und/oder einen dritten Dosierer (65) umfasst.

8. Aufbereitungsanlage nach mindestens einem der vorangegangenen Ansprüche, **dadurch gekennzeichnet,**
**dass** die Mehrwellen-Schneckenmaschine (2) mindestens eine Entgasungsöffnung (79, 100) zum Entgasen des zweiten Anteils (F₂) des mineralischen Füllstoffs (F) umfasst.

9. Aufbereitungsanlage nach Anspruch 8, **dadurch gekennzeichnet, dass** die mindestens eine Entgasungsöffnung (79) zum Entgasen des zweiten Anteils (F₂) des mineralischen Füllstoffs (F) in einer Förderrichtung (10) stromabwärts zu einer zweiten Zuführöffnung (63) der Mehrwellen-Schneckenmaschine (2) angeordnet ist.

10. Aufbereitungsanlage nach Anspruch 9, **dadurch gekennzeichnet, dass** die Mehrwellen-Schneckenmaschine (2) zwischen der zweiten Zuführöffnung (63) und der mindestens einen Entgasungsöffnung (79) eine erste Homogenisierungszone (36) zum Homogenisieren des aufgeschmolzenen Polymers (P) und des zweiten Anteils (F₂) des mineralischen Füllstoffs (F) ausbildet.

11. Aufbereitungsanlage nach Anspruch 9 oder 10, **dadurch gekennzeichnet,**
**dass** die Mehrwellen-Schneckenmaschine (2) in der Förderrichtung (10) stromabwärts zu der mindestens einen Entgasungsöffnung (79) eine zweite Homogenisierungszone (38) zum Homogenisieren des aufgeschmolzenen Polymers (P) und des zweiten Anteils (F₂) des mineralischen Füllstoffs (F) ausbildet.

12. Aufbereitungsanlage nach mindestens einem der vorangegangenen Ansprüche, **gekennzeichnet**
**durch** eine Druckaufbaueinrichtung (6) zur Erhöhung eines Drucks (p) der Polymer-Füllstoff-Zusammensetzung (C), die in einer Förderrichtung (10) nach der Mehrwellen-Schneckenmaschine (2) angeordnet ist.

13. Aufbereitungsanlage nach Anspruch 12, **dadurch gekennzeichnet, dass** die Druckaufbaueinrichtung (6) eine gegenläufige Mehrwellen-Druckaufbauschneckenmaschine (104) umfasst.

14. Aufbereitungsanlage nach mindestens einem der vorangegangenen Ansprüche, **gekennzeichnet**
**durch** eine Granuliereinrichtung (7) zur Granulierung der Polymer-Füllstoff-Zusammensetzung (C), die insbesondere in einer Förderrichtung (10) nach der Druckaufbaueinrichtung (6) angeordnet ist.

15. Verfahren zum Aufbereiten einer Polymer-Füllstoff-Zusammensetzung, insbesondere einer Polyvinylchlorid-Füllstoff-Zusammensetzung, mit den Schritten:
- Bereitstellen einer Aufbereitungsanlage (1) nach mindestens einem der Ansprüche 1 bis 14,
- Zuführen des Polymers (P) und des ersten Anteils (F₁) des mineralischen Füllstoffs (F) in die Mehrwellen-Schneckenmaschine (2) mittels der ersten Zuführeinrichtung (3),
- Zuführen des zweiten Anteils (F₂) des mineralischen Füllstoffs (F) in die Mehrwellen-Schneckenmaschine (2) mittels der zweiten Zuführeinrichtung (4), und
- Aufbereiten der Polymer-Füllstoff-Zusammensetzung (C) aus dem Polymer (P) und dem mineralischen Füllstoff (F) mittels der Mehrwellen-Schneckenmaschine (2).
